# EUROPÄISCHE PATENTSCHRIFT

(11) **EP 2 097 467 B1**
(45) Veröffentlichungstag und Bekanntmachung des Hinweises auf die Patenterteilung: **04.08.2010**
(21) Anmeldenummer: 07821669.4
(22) Anmeldetag: 23.10.2007
(51) Int. Cl.: C08G 18/58, C08G 18/64, C08L 75/08, C09D 163/00, C09J 175/00

(54) **LEITFÄHIGE, ORGANISCHE BESCHICHTUNGEN MIT OPTIMIERTEM POLYMERSYSTEM**
CONDUCTIVE, ORGANIC COATINGS HAVING AN OPTIMIZED POLYMER SYSTEM
REVÊTEMENTS ORGANIQUES CONDUCTEURS À SYSTÈME POLYMÈRE OPTIMISÉ

(30) Priorität: 04.01.2007 DE 102007001654
(43) Veröffentlichungstag der Anmeldung: 09.09.2009
(73) Patentinhaber: Henkel AG & Co. KGaA, 40589 Düsseldorf (DE)
(72) Erfinder: HACKBARTH, Karsten, 40237 Düsseldorf (DE); LORENZ, Wolfgang, 40699 Erkrath (DE); WILKE, Eva, 42781 Haan (DE); ROTH, Marcel, 40589 Düsseldorf (DE); WARK, Reiner, 42103 Wuppertal (DE); MÜLLER, Stephan, 40789 Monheim (DE); SANCHIS OTERO, Guadalupe, 40227 Düsseldorf (DE); GÖSKE-KRAJNC, Manuela, 40721 Hilden (DE); KUNZ, Andreas, 42855 Remscheid (DE)
(86) Internationale Anmeldenummer: PCT/EP2007/061305
(87) Internationale Veröffentlichungsnummer: WO 2008/080647

(56) Entgegenhaltungen:
- WO-A-01/85860
- WO-A-99/24515
- WO-A-02/062907
- WO-A-2005/123849

## Beschreibung

Die vorliegende Erfindung betrifft leitfähige und schweißbare Korrosionsschutz-Beschichtungen von Metalloberflächen sowie ein Verfahren zu Beschichtung von Metalloberflächen mit elektrisch leitfähigen organischen Beschichtungen.

Als elektrisch leitfähig im Sinne der Erfindung soll eine Beschichtung verstanden werden, die nach dem Aushärten unter den üblichen Bedingungen der Fügetechnik in der Automobilindustrie schweißbar, vorzugsweise nach dem Punktschweißverfahren schweißbar ist. Weiterhin soll die Leitfähigkeit ausreichen, um unter den üblichen Abscheidungsbedingungen von Elektrotauchlacken eine vollständige Abscheidung dieser Lacke zu gewährleisten.

In der metallverarbeitenden Industrie, insbesondere beim Bau von Kraftfahrzeugen müssen die metallischen Bestandteile der Erzeugnisse vor Korrosion geschützt werden. Nach herkömmlichem Stand der Technik werden dabei die Bleche im Walzwerk zunächst mit Korrosionsschutzölen beschichtet und vor der Verformung und dem Stanzen ggf. mit Ziehfetten beschichtet. Im Kraftfahrzeugbau werden dabei für die Karosserie bzw. Karosserieteile entsprechend geformte Blechteile ausgestanzt und unter Verwendung von besagten Ziehfetten oder -ölen im Tiefziehverfahren verformt, dann im allgemeinen durch Schweißen und/oder Bördeln und/oder Kleben zusammengefügt und anschließend aufwendig gereinigt. Daran schließen sich die korrosionsschützenden Oberflächenvorbehandlungen wie Phosphatierung und/oder Chromatierung an, worauf eine erste Lackschicht mittels Elektrotauchlackierung auf die Bauteile aufgebracht wird. In der Regel folgt dieser ersten Elektrotauchlackierung, insbesondere im Falle von Automobilkarosserien, die Aufbringung mehrerer weiterer Lackschichten.

In der metallverarbeitenden Industrie wie beispielsweise im Fahrzeug- und Haushaltsgerätebau besteht aus Gründen der Prozeßvereinfachung der Wunsch, den Aufwand für die chemische Korrosionsschutzbehandlung zu verringern. Dies kann dadurch geschehen, dass Rohmaterial in Form von Metallblechen oder Metallbändern eingesetzt wird, das bereits eine Korrosionsschutzschicht trägt.

Es besteht daher Bedarf, einfachere Herstellungsverfahren zu finden, bei denen bereits vorbeschichtete Bleche umgeformt, geschweißt und in bewährter Weise elektrotauchlackiert werden können. So gibt es eine Reihe von Verfahren, bei denen im Anschluß an eine Phosphatierung und/oder Chromatierung im sogenannten Coil-Coating-Verfahren eine mehr oder weniger leitfähige organische Beschichtung aufgebracht wird. Dabei sollen diese organischen Beschichtungen in der Regel so beschaffen sein, dass sie genügende elektrische Leitfähigkeit besitzen, um automobiltypische Schweißverfahren, beispielsweise elektrische Punktschweißverfahren nicht zu beeinträchtigen. Außerdem sollen diese Beschichtungen mit herkömmlichen Elektrotauchlacken beschichtbar sein.

Insbesondere in der Automobilindustrie werden dabei in neuerer Zeit neben normalen Stahlblechen vermehrt auch die nach den verschiedensten Verfahren verzinkten und/oder legierungsverzinkten Stahlbleche eingesetzt.

Die Beschichtung von Stahlblechen mit organischen Beschichtungen, die schweißbar sind und die direkt im Walzwerk nach dem sogenannten Coil-Coating-Verfahren aufgebracht werden, ist im Prinzip bekannt.

So beschreibt die DE-C-3412234 einen leitfähigen und schweißbaren Korrosionsschutzprimer für elektrolytisch dünnverzinktes, phosphatiertes oder chromatiertes und verformbares Stahlblech. Dieser Korrosionsschutzprimer besteht aus einer Mischung von über 60 % Zink, Aluminium, Graphit und/oder Molybdändisulfid sowie einem weiteren Korrosionsschutzpigment und 33 bis 35 % eines organischen Bindemittels sowie etwa 2 % eines Dispergierhilfsmittels oder Katalysators. Als organisches Bindemittel werden Polyesterharze und/oder Epoxidharze sowie deren Derivate vorgeschlagen. Konkret genannt werden ein Epoxid/Phenyl-Präkondensat, ein Epoxyester sowie lineare ölfreie Mischpolyester auf Basis Terephthalsäure.

Die EP-A-573015 beschreibt ein organisch beschichtetes Stahl-Verbundblech bestehend aus einer ein oder zweiseitig mit einer Zink oder Zinklegierung beschichteten Oberfläche, die mit einem Chromatfilm versehen ist und einer darauf befindlichen organischen Beschichtung mit einer Schichtstärke von 0,1 bis 5 µm. Die organische Beschichtung ist aus einer Primer-Zusammensetzung gebildet, die aus einem organischen Lösungsmittel, einem Epoxidharz mit einem Molekulargewicht zwischen 500 und 10.000, einem aromatischen Polyamin und einer Phenol- oder Cresolverbindung als Beschleuniger besteht. Weiterhin enthält die Primer-Zusammensetzung ein Polyisocyanat sowie kolloidale Kieselsäure.

In analoger Weise beschreibt die DE-A-3640662 ein oberflächenbehandeltes Stahlblech, umfassend ein zinküberzogenes oder mit einer Zinklegierung überzogenes Stahlblech, einem auf der Oberfläche des Stahlbleches gebildeten Chromatfilm und einer auf dem Chromatfilm gebildeten Schicht einer Harzzusammensetzung. Diese Harzzusammensetzung besteht aus einem basischen Harz, das durch Umsetzung eines Epoxidharzes mit Aminen hergestellt wird, sowie einer Polyisocyanatverbindung.

Die WO 99/24515 offenbart eine leitfähige und schweißbare Korrosionsschutz-Zusammensetzung zur Beschichtung von Metalloberflächen, die
a) 10 bis 40 Gew.-% eines organischen Bindemittels enthaltend
   aa) mindestens ein Epoxidharz
   ab) mindestens einen Härter ausgewählt aus Guanidin, substituierten Guanidinen, substituierten Harnstoffen, cyclischen tertiären Aminen und deren Mischungen
   ac) mindestens ein blockiertes Polyurethanharz
b) 0 bis 15 Gew.-% eines Korrosionsschutzpigments auf Silicatbasis
c) 40 bis 70 Gew.-% pulverförmiges Zink, Aluminium, Graphit und/oder Molybdänsulfid, Ruß, Eisenphosphid
d) 0 bis 30 Gew.-% eines Lösungsmitttels enthalten.

Die WO 01/85860 betrifft eine leitfähige und schweißbare Korrosionsschutz-Zusammensetzung zur Beschichtung von Metalloberflächen dadurch gekennzeichnet, daß sie, bezogen auf die Gesamtzusammensetzung,
a) 5 bis 40 Gew.-% eines organischen Bindemittels enthaltend
   aa) mindestens ein Epoxidharz
   ab) mindestens einen Härter ausgewählt aus Cyanoguanidin, Benzoguanamin und plastifiziertem Harnstoffharz
   ac) mindestens ein Aminaddukt ausgewählt aus Polyoxyalkylentriamin und Epoxidharz-Aminaddukten
b) 0 bis 15 Gew.-% eines Korrosionsschutzpigments
c) 40 bis 70 Gew.-% Leitfähigkeitspigment, ausgewählt aus pulverförmigem Zink, Aluminium, Graphit, Molybdänsulfid, Ruß und Eisenphosphid
d) 0 bis 45 Gew.-% eines Lösungsmitttels
sowie erwünschtenfalls bis zu 50 Gew.-% weitere Wirk- oder Hilfsstoffe enthält, wobei sich die Anteile der Komponenten zu 100 Gew.-% addieren.

Trotz des umfangreichen Standes der Technik besteht weiterhin Bedarf, die bekannten schweißbaren Korrosionsschutz-Beschichtungen weiter zu verbessern. Dabei sollen die schweißbaren Beschichtungen gute Gleiteigenschaften aufweisen, damit die beschichteten Bleche möglichst ohne Beölung umformbar sind. Hierdurch kann zum einen Umformöl eingespart und zum anderen die erforderliche Reinigung vor einer weiteren Überlackierung vereinfacht werden. Hierdurch lässt sich der Materialverbrauch während der gesamten Produktionskette weiter verringern. Die vorliegende Erfindung stellt sich die Aufgabe, ein Beschichtungsmittel sowie ein Beschichtungsverfahren zur Verfügung zu stellen, welche die genannten Vorteile bewirken.

Daher betrifft die vorliegende Erfindung in einem ersten Aspekt Mittel zum Beschichten von Metalloberflächen, das in einem organischen Lösungsmittel oder Lösungsmittelgemisch gelöste oder dispergierte organische Harzkomponenten enthält, dadurch gekennzeichnet, dass das Mittel mindestens folgende organische Harzkomponenten enthält:
a) als Hydroxylguppen-haltiger Polyether vorliegendes Epoxidharz auf Basis eines Bisphenol-Epichlorhydrin-Polykondensationsproduktes,
b) blockiertes aliphatisches Polyisocyanat,
c) nicht blockiertes aliphatisches Polyisocyanat,
d) mindestens eine Reaktionskomponente ausgewählt aus Hydroxylgruppen-haltigen Polyestern und Hydroxylgruppen-haltigen Poly(meth)acrylaten.

Bei der Komponente a) handelt es sich um ein durchreagiertes Polykondensationsprodukt von Epichlorhydrin und einem Bisphenol. Dieses weist im wesentlichen keine Epoxidgruppen als reaktive Gruppen mehr auf. Das Polymer liegt dann in Form eines Hydroxylgruppen-haltigen Polyethers vor, der über diese Hydroxylgruppen Vernetzungsreaktionen mit beispielsweise Polyisocyanaten eingehen kann.

Die Bisphenol-Komponente dieses Polymers kann beispielsweise ausgewählt sein aus Bisphenol A und Bisphenol F. Die mittlere Molmasse (gemäß Herstellerangaben, beispielsweise bestimmbar durch Gelpermeationschromotographie) liegt vorzugsweise im Bereich von 20.000 bis 60.000, insbesondere im Bereich von 30.000 bis 50.000. Die OH-Zahl liegt vorzugsweise im Bereich von 170 bis 210 und insbesondere im Bereich von 180 bis 200. Insbesondere sind Polymere bevorzugt, deren Hydroxylgehalt bezogen auf das Estherharz im Bereich von 5 bis 7 Gew.-% liegt.

Die aliphatischen Polyisocyanate b) und c) basieren vorzugsweise auf HDI, insbesondere auf HDI-Trimer. Als Blockierungsmittel in dem blockierten aliphatischen Polyisocyanat b) können die üblichen Polyisocyanat-Blockierungsmittel eingesetzt sein. Beispielsweise seien genannt: Butanonoxim, Dimethylpyrazol, Malonester, Diisopropylamin/Malonester, Diisopropylamin/Triazol sowie ε-Caprolactam. Bevorzugt wird eine Kombination von Malonester und Diisopropylamin als Blockierungsmittel verwendet.

Der Gehalt an blockierten NCO-Gruppen der Komponente b) liegt vorzugsweise im Bereich von 8 bis 10 Gew.-%, insbesondere im Bereich von 8,5 bis 9,5 Gew.-%. Das Äquivalentgewicht liegt vorzugsweise im Bereich vor 350 bis 600, insbesondere im Bereich von 450 bis 500 g/mol.

Das nicht-blockierte aliphatische Polyisocyanat c) hat vorzugsweise ein Äquivalentgewicht im Bereich von 200 bis 250 g/mol und einen NCO-Gehalt im Bereich von 15 bis 23 Gew.-%. Beispielsweise kann ein aliphatisches Polyisocyanat ausgewählt werden, das ein Äquivalentgewicht im Bereich von 200 bis 230 g/mol, insbesondere im Bereich von 210 bis 220 g/mol und einen NCO-Gehalt im Bereich von 18 bis 22 Gew.-%, vorzugsweise im Bereich von 19 bis 21 Gew.-% aufweist. Ein weiteres geeignetes aliphatisches Polyisocyanat hat beispielsweise ein Äquivalentgewicht im Bereich von 220 bis 250 g/mol, insbesondere im Bereich von 230 bis 240 g/mol und einen NCO-Gehalt im Bereich von 15 bis 20 Gew.-%, vorzugsweise im Bereich von 16,5 bis 19 Gew.-%. Dabei kann jedes dieser genannten aliphatischen Polyisocyanate die Komponente c) darstellen. Als Komponente c) kann jedoch auch ein Gemisch dieser beiden Polyisocyanate vorliegen. Setzt man ein Gemisch der beiden genannten Polyisocyanate ein, so liegt das Mengenverhältnis des erstgenannten Polyisocyanats zum letztgenannten Polyisocyanat für die Komponente c) vorzugsweise im Bereich von 1 : 1 bis 1 : 3.

Die Komponente d) ist ausgewählt aus Hydroxylgruppen-haltigen Polyestern und Hydroxylgruppen-haltigen Poly(meth)acrylaten. Beispielsweise kann ein Hydroxylgruppen-haltiges Poly(meth)acrylat mit einer Säurezahl im Bereich von 3 bis 12, insbesondere im Bereich von 4 bis 9 mg KOH/g eingesetzt werden. Der Gehalt an Hydroxylgruppen liegt vorzugsweise im Bereich von 1 bis 5 und insbesondere im Bereich von 2 bis 4 Gew.-%. Das Äquivalentgewicht liegt vorzugsweise im Bereich von 500 bis 700, insbesondere im Bereich von 550 bis 600 g/mol.

Setzt man als Komponente d) einen Hydroxylgruppen-haltigen Polyester ein, so kann man hierfür einen verzweigten Polyester mit einem Äquivalentgewicht im Bereich von 200 bis 300, insbesondere im Bereich von 240 bis 280 g/mol auswählen. Weiterhin ist beispielsweise ein schwach verzweigter Polyester mit einem Äquivalentgewicht im Bereich von 300 bis 500, insbesondere im Bereich von 350 bis 450 g/mol geeignet. Diese unterschiedlichen Polyester-Typen können jedes für sich oder als Gemisch die Komponente d) bilden. Selbstverständlich kann als Komponente d) auch eine Mischung von Hydroxylgruppen-haltigen Polyestern und Hydroxylgruppen-haltigen Poly(meth)acrylaten vorliegen.

Das erfindungsgemäße Mittel enthält also sowohl ein blockiertes aliphatisches Polyisocyanat b) als auch ein nicht-blockiertes aliphatisches Polyiscyanat c). Als potenzielle Reaktionskomponenten für diese beiden Polyisocyanat-Typen stehen die Hydroxylgruppen-haltigen Komponenten a) und d) zur Verfügung. Durch mögliche Reaktion jeder der Komponenten a) und d) mit jeder der Komponenten b) und c) entsteht beim Aushärten des Mittels ein komplexes Polymer-Netzwerk aus Polyurethanen. Zusätzlich können in dem Fall, dass als Komponente d) Hydroxylgruppen-haltige Poly(meth)acrylate eingesetzt werden, weitere Vernetzungen über die Doppelbindungen dieser Komponenten eintreten. Soweit nicht alle Doppelbindungen der Poly(meth)acrylate beim Aushärten vernetzen, können insbesondere oberflächlich vorhandene Doppelbindungen eine verbesserte Verknüpfung zu einem nachträglich aufgebrachten Lack bewirken, falls dieser ebenfalls Komponenten mit polymerisierbaren Doppelbindungen enthält. Unter diesem Gesichtspunkt ist es bevorzugt, dass die Komponente d) zumindest teilweise aus Hydroxylgruppen-haltigen Poly(meth)acrylaten besteht.

Beim Aushärten des erfindungsgemäßen Mittels ist zu erwarten, das zunächst das nicht-blockierte aliphatische Polyisocyanat c) mit einer oder beiden der Komponenten a) und d) reagiert. Sofern die Hydroxylgruppen der Komponenten d) reaktiver sind als diejenigen der Komponente a), tritt beim Aushärten zunächst bevorzugt eine Reaktion der Komponente c) mit der Komponente d) ein.

Dem gegenüber reagiert das blockierte aliphatische Polyisocyanat b) erst dann mit einer oder beiden der Komponenten a) und d), wenn die Deblockierungstemperatur erreicht ist. Zur Polyurethanbildung steht dann nur noch derjenige der Reaktionspartner a) und d) zur Verfügung, der die weniger reaktionsfreudigen OH-Gruppen aufweist. Für das sich ausbildende Polyurethan-Netzwerk bedeutet dies beispielsweise, dass dann, wenn die OH-Gruppen der Komponenten a) reaktionsträger sind als diejenigen Komponenten d), sich zwei Polyurethan-Netzwerke aus der Reaktion der Komponenten c) und d) einerseits und der Komponenten a) und b) andererseits aufbauen.

Das erfindungsgemäße Mittel enthält die Komponenten a) und b) einerseits und c) und d) andererseits vorzugsweise in folgenden relativen Gewichtsverhältnissen:
a) : b) = 1: 0,8 bis 1 : 1,3
c) : d) = 1 : 1,4 bis 1 : 2,3

Die Komponenten a) und d) einerseits sowie b) und c) andererseits liegen vorzugsweise in folgendem relativen Gewichtsverhältnis vor:
a) : d) = 1 : 2 bis 1: 6 und (vorzugsweise 1 : 3 bis 1 : 5)
b) : c) = 1 : 0,5 bis 1 : 5 (vorzugsweise 1 : 1 bis 1 : 3).

Bevorzugte absolute Mengenbereiche der genannten vier Komponenten a) bis d) werden weiter unten angegeben, da diese von der Dichte fakultativ vorhandener Leitfähigkeitspigmente abhängen. Vorzugsweise enthält das erfindungsgemäße Mittel zusätzlich zu den Komponenten a) bis d) ein Leitfähigkeitspigment oder eine Mischung von Leitfähigkeitspigmenten. Diese können eine relativ geringe Dichte wie beispielsweise Ruß und Graphit oder eine relativ hohe Dichte wie beispielsweise metallisches Eisen aufweisen. Der Absolutgehalt des erfindungsgemäßen Mittels an Leitfähigkeitspigmenten hängt von deren Dichte ab, da es für die Wirkung als Leitfähigkeitspigment weniger auf den Massenanteil als vielmehr auf den Volumenanteil des Leitfähigkeitspigments in der ausgehärteten Beschichtung ankommt.

Allgemein gilt, dass das erfindungsgemäße Mittel, bezogen auf die Gesamtmasse des Mittels, (0,8 bis 8)·ρ Gew.-% an Leitfähigkeitspigment enthält, wobei ρ die Dichte des Leitfähigkeitspigments oder die mittlere Dichte der Mischung von Leitfähigkeitspigmenten in g/cm³ bedeutet. Vorzugsweise enthält das Mittel bezogen auf seine Gesamtmasse (2 bis 6)·ρ Gew.-% an Leitfähigkeitspigment.

Beispielsweise bedeutet dies: Enthält das Mittel als Leitfähigkeitspigment nur Graphit mit einer Dichte von 2,2 g/cm², so enthält es vorzugsweise mindestens 1,76, insbesondere mindestens 4,4 Gew.-% und vorzugsweise nicht mehr als 17,6, insbesondere nicht mehr als 13,2 Gew.-% Graphit. Wird Eisenpulver mit einer Dichte von 7,9 g/cm² als alleiniges Leitfähigkeitspigment verwendet, enthält das Mittel, bezogen auf seine Gesamtmasse, vorzugsweise mindestens 6,32, insbesondere mindestens 15,8 Gew.-% und nicht mehr als 63,2, insbesondere nicht mehr als 47,4 Gew.-% Entsprechend errechnen sich die Gew.-Anteile, wenn als Leitfähigkeitspigment beispielsweise ausschließlich MoS₂ mit einer Dichte von 4,8 g/cm³, Aluminium mit einer Dichte von 2,7 g/cm³ oder Zink mit einer Dichte von 7,1 g/cm³ eingesetzt wird.

Es kann jedoch zu einer günstigen Eigenschaften-Kombination kommen, wenn das erfindungsgemäße Mittel nicht nur ein einziges Leitfähigkeitspigment, sondern eine Mischung aus mindestens 2 Leitfähigkeitspigmenten enthält, die sich dann vorzugsweise in ihrer Dichte stark unterscheiden. Beispielsweise kann eine Mischung eingesetzt werden, bei der der erste Mischungspartner ein leichtes Leitfähigkeitspigment wie beispielsweise Ruß, Graphit oder Aluminium und der zweite Partner der Mischung ein schweres Leitfähigkeitspigment wie beispielsweise Zink oder Eisen darstellt. In diesen Fällen wird für die Dichte ρ in der vorstehend genannten Formel die mittlere Dichte der Mischung eingesetzt, die sich aus den Gew.-Anteilen der Komponenten in der Mischung und aus ihrer jeweiligen Dichte errechnen lässt.

Demgemäß ist eine spezielle Ausführungsform eines erfindungsgemäßen Mittels dadurch gekennzeichnet, dass es sowohl ein Leitfähigkeitspigment mit einer Dichte von kleiner als 3 g/cm³ als auch ein Leitfähigkeitspigment mit einer Dichte von größer als 4 g/cm³ enthält, wobei die Gesamtmenge an Leitfähigkeitspigment, bezogen auf die Gesamtmasse des Mittels, (0,8 bis 8)·ρ Gew.-% beträgt, wobei ρ die mittlere Dichte der Mischung der Leitfähigkeitspigmente in g/cm³ bedeutet.

Beispielsweise kann das erfindungsgemäße Mittel als Leitfähigkeitspigment eine Mischung aus Ruß oder Graphit einerseits und Eisenpulver andererseits enthalten. Dabei können die Gewichtsverhältnisse von Ruß und/oder Graphit einerseits und Eisen andererseits im Bereich von 1 : 0,1 bis 1 : 10, insbesondere im Bereich von 1 : 0,5 bis 1 : 2 liegen.

Das Mittel kann also als leichtes elektrisch leitfähiges Pigment Aluminiumflocken, Graphit und/oder Ruß enthalten. Dabei ist die Verwendung von Graphit und/oder Ruß bevorzugt. Ruß und insbesondere Graphit bewirken nicht nur eine elektrische Leitfähigkeit der erhaltenen Beschichtung, sondern tragen auch dazu bei, dass diese Schicht eine erwünschte geringe Mohs'sche Härte von nicht mehr als 4 aufweist und gut umformbar ist. Insbesondere die Schmierwirkung von Graphit trägt zu einem verringerten Verschleiß der Umformwerkzeuge bei. Diese Wirkung kann noch gefördert werden, indem man zusätzlich Pigmente mit Schmierwirkung wie beispielsweise Molybdänsulfid mit einsetzt. Als weitere Gleitmittel oder Umformhilfen kann das Mittel Wachse und/oder Teflon enthalten.

Das elektrisch leitfähige Pigment mit einem spezifischen Gewicht von maximal 3 g/cm³ kann in Form kleiner Kugeln oder Aggregate solcher Kugeln vorliegen. Dabei ist es bevorzugt, dass die Kugeln bzw. die Aggregate dieser Kugeln einen Durchmesser von weniger als 2 µm aufweisen. Vorzugsweise liegen diese elektrisch leitfähigen Pigmente jedoch in Form von Plättchen vor, deren Dicke vorzugsweise geringer ist als 2 µm.

Das erfindungsgemäße Mittel enthält zumindest die weiter oben beschriebenen Harzkomponenten sowie Lösungsmittel. Die Harzkomponenten a) bis d) liegen in ihrer Handelsform in der Regel als Lösung bzw. Dispersion in organischen Lösungsmitteln vor. Das hieraus zubereitete erfindungsgemäße Mittel enthält dann ebenfalls diese Lösungsmittel.

Diese sind erwünscht, um trotz der zusätzlichen Anwesenheit des elektrisch leitfähigen Pigments wie beispielsweise Graphit und ggf. weiterer Pigmente wie insbesondere Korrosionsschutzpigmente eine Viskosität einzustellen, die es erlaubt, das Beschichtungsmittel im Coil-Coating-Verfahren auf das Substrat aufzubringen. Erforderlichenfalls kann zusätzlich Lösungsmittel zugesetzt werden. Die chemische Natur der Lösungsmittel ist in der Regel durch die Wahl der Rohstoffe, die das entsprechende Lösungsmittel enthalten, vorgegeben. Beispielsweise kann als Lösungsmittel vorlliegen: Cyclohexanon, Diacetonalkohol, Diethylenglykolmonobutyletheracetat, Diethylenglykol, Propylenglykolmethylether, Propylenglykol-n-Butylether, Methoxypropylacetat, n-Butylacetat, Xylol, Glutarsäuredimethylester, Adipinsäuredimethylester und/oder Bernsteinsäuredimethylester.

Der bevorzugte Anteil an Lösungsmittel einerseits und organischen Harzkomponenten andererseits in dem erfindungsgemäßen Mittel hängt, wenn man ihn in Gew.-% ausdrückt, von dem Anteil an Leitfähigkeitspigment in Gew.-% in dem Mittel ab. Je höher die Dichte des Leitfähigkeitpigments, desto höher ist dessen bevorzugter Gewichtsanteil an dem gesamten Mittel, und desto geringer sind die Gewichtsanteile an Lösungsmittel und Harzkomponenten. Die bevorzugten Gew.-Anteile von Lösungsmittel und Harzkomponenten hängen daher von der Dichte ρ des eingesetzten Leitfähigkeitspigments bzw. der mittleren Dichte ρ einer Mischung von Leitfähigkeitspigmenten ab.

Allgemein gilt für das erfindungsgemäße Mittel, dass es vorzugsweise, bezogen auf die Gesamtmasse des Mittels, [(25 bis 60)· Anpassungsfaktor] Gew.-%, vorzugsweise [(35 bis 55)· Anpassungsfaktor] Gew.-% organisches Lösungsmittel und [(20 bis 45)· Anpassungsfaktor] Gew.-%, vorzugsweise [(25 bis 40)· Anpassungsfaktor] Gew.-%, organische Harzkomponenten enthält, wobei die Summe der Gewichtsprozentanteile von organischer Harzkomponente und Lösungsmittel nicht größer als [93 · Anpassungsfaktor] Gew.-%, vorzugsweise nicht größer als [87· Anpassungsfaktor] Gew.-% ist und wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet.

Hinsichtlich der einzelnen Harzkomponente a) gilt vorzugsweise, dass das Mittel, bezogen auf die Gesamtmasse des Mittels, [(2 bis 8)· Anpassungsfaktor] Gew.-%, vorzugsweise [(3 bis 5)· Anpassungsfaktor] Gew.-% der Harzkomponente a) enthält, wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet. Aus dem Mengenanteil der Harzkomponente a) lassen sich mit den weiter oben angegebenen bevorzugten Mengenverhältnissen der einzelnen Harzkomponenten die bevorzugten Mengenanteile der Harzkomponenten b) bis d) im erfindungsgemäßen Mittel berechnen. Beispielsweise kann der Anteil der Komponenten b) an der Gesamtmasse des Mittels [(2 bis 9)· Anpassungsfaktor] Gew.-%, vorzugsweise [(3 bis 6)· Anpassungsfaktor] Gew.-% betragen, der Anteil der Harzkomponenten c) [(4 bis 18) · Anpassungsfaktor] Gew.-%, vorzugsweise [(6 bis 12) · Anpassungsfaktor] Gew.-% und der Anteil der Harzkomponenten d) [(7 bis 30) · Anpassungsfaktor] Gew.-%, vorzugsweise [(10 bis 20)· Anpassungsfaktor] Gew.-%. Der "Anpassungsfaktor" hat dabei die vorstehend angegebene Bedeutung.

Weiterhin ist es bevorzugt, dass die Schicht b) zusätzlich Korrosionsinhibitoren und/oder Korrosionsschutzpigmente enthält. Hierbei können Korrosioninhibitoren oder Korrosionsschutzpigmente eingesetzt werden, die im Stand der Technik für diesen Zweck bekannt sind. Beispielsweise genannt seien: Magnesiumoxidpigmente, insbesondere in nanoskaliger Form, feinteiliges und sehr feinteiliges Bariumsulfat oder Korrosionsschutzpigmente basieren auf Calciumsilicat. Der bevorzugte Gewichtsanteil der Korrosionsschutzpigmente an der Gesamtmasse des Mittels hängt wiederum von der Dichte der eingesetzten Korrosionsschutzpigmente ab. Vorzugsweise enthält das erfindungsgemäße Mittel, bezogen auf die Gesamtmasse des Mittels, [(5 bis 25)· Anpassungsfaktor] Gew.-%, insbesondere [(10 bis 20) · Anpassungsfaktor] Gew.-% Korrosionsschutzpigment, wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet.

Die mechanischen und chemischen Eigenschaften der nach dem Einbrennen des erfindungsgemäßen Mittels erhaltenen Beschichtung können weiterhin dadurch verbessert werden, dass diese zusätzlich Füllstoffe enthält. Beispielsweise können diese ausgewählt sein aus Kieselsäuren oder Siliciumoxiden (gegebenenfalls hydrophobiert), Aluminiumoxiden (einschließlich basischen Aluminiumoxid), Titandioxid und Barriumsulfat. Hinsichtlich deren bevorzugten Mengen gilt, dass das Mittel [(0,1 bis 3)· Anpassungsfaktor] Gew.-%, vorzugsweise [(0,4 bis 2)· Anpassungsfaktor] Gew.-% Füllstoff ausgewählt aus Kieselsäuren bzw. Siliciumoxiden, Aluminiumoxiden, Titandioxid und Bariumsulfat enthält, wobei der Anpassungsfaktor [100-2,8 ρ]:93,85 ist und ρ die Dichte des Leitfähigkeitspigments oder die mittlere Dichte der Mischung von Leitfähigkeitspigmenten in g/cm³ bedeutet.

Werden Gleitmittel oder Umformhilfen zusätzlich mit eingesetzt, so gilt, dass das Mittel bezogen, auf seine Gesamtmasse, Gleitmittel oder Umformhilfen, vorzugsweise ausgewählt aus Wachsen, Molybdänsulfid und Teflon, vorzugsweise in einer Menge von [(0,5 bis 20) · Anpassungsfaktor], insbesondere in einer Menge von [(1 bis 10) · Anpassungsfaktor] Gew.-% enthält, wobei der Anpassungsfaktor [100-2,8ρ]:93,85 ist und ρ die Dichte des Leitfähigkeitspigments oder die mittlere Dichte der Mischung von Leitfähigkeitspigmenten in g/cm³ bedeutet.

In einer weiteren bevorzugten Ausführungsform enthält das Mittel kein Leitfähigkeitspigment. Damit ist gemeint, dass man ein solches Pigment nicht absichtlich zusetzt. Aufgrund von Verunreinigungen können jedoch geringe Anteile elektrisch leitfähiger Pigmente zufällig vorhanden sein. Deren Anteil an dem Mittel sollte aber nicht mehr als 0,1 Gew.-% betragen.

Alle anderen vorstehend genannten Komponenten können in diesem Leitfähigkeitspigment-freien Mittel jedoch vorhanden sein. Die bevorzugten Mengenanteile ergeben sich aus den vorstehend gemachten Mengenangaben dadurch, dass man jeweils den Anpassungsfaktor = 1 setzt.

Ein weiterer Gegenstand der vorliegenden Erfindung ist ein Verfahren zur Herstellung eines beschichteten Blechs oder Bauteils aus Metall, dadurch gekennzeichnet, dass man das zu beschichtende Blech oder Bauteil
i) erforderlichenfalls reinigt,
ii) mit einer Konversionslösung in Kontakt bringt, welche eine Konversionsschicht erzeugt, die nicht mehr als 1 mg Chrom pro m² enthält, und danach mit oder ohne Zwischenspülung
iii) mit einem Mittel gemäß vorstehender Beschreibung beschichtet und bei einer Substrattemperatur im Bereich von 120 bis 260 °C aushärtet.

Vorzugsweise härtet man das Mittel bei einer Substrattemperatur im Bereich von 150 bis 170°C.

Dabei führt man vorzugsweise zumindest die Schritte (ii) und (iii) als Bandbehandlungsverfahren durch, wobei man im Schritt (iii) das flüssige Behandlungsmittel, in einer solchen Menge aufbringt, dass man nach dem Aushärten die gewünschte Schichtdicke im Bereich von 0,5 bis 10 µm erhält. Vorzugsweise wird also das Mittel im so genannten Coil-Coating-Verfahren aufgebracht. Hierbei werden laufende Metallbänder kontinuierlich beschichtet. Das Beschichtungsmittel kann dabei nach unterschiedlichen Verfahren aufgetragen werden, die im Stand der Technik geläufig sind. Beispielsweise können Auftragswalzen verwendet werden, mit denen sich direkt die erwünschte Nassfilm-Dicke einstellen lässt. Alternativ hierzu kann man das Metallband in das Beschichtungsmittel eintauchen oder es mit dem Beschichtungsmittel besprühen, wonach man mit Hilfe von Abquetschwalzen die erwünschte Nassfilmdicke einstellt.

Sofern Metallbänder beschichtet werden, die unmittelbar zuvor mit einer Metallauflage, beispielsweise mit Zink oder Zinklegierungen, elektrolytisch oder im Schmelztauchverfahren überzogen wurden, ist eine Reinigung der Metalloberflächen vor der Durchführung der Konversionsbehandlung (ii) nicht erforderlich. Sind die Metallbänder jedoch bereits gelagert worden und insbesondere mit Korrosionsschutzölen versehen, ist ein Reinigungsschritt notwendig, bevor man den Schritt (ii) durchführt.

Nach dem Auftragen des flüssigen Behandlungsmittels im Schritt (iii) wird das beschichtete Blech auf die erforderliche Trocknungs- bzw. Vernetzungstemperatur für die organische Beschichtung erwärmt. Das Erwärmen des beschichteten Substrats auf die erforderliche Substrattemperatur ("Peak-metal-temperature" = TMP) im Bereich von 120 bis 260°C, vorzugsweise im Bereich von 150 bis 170°C kann in einem aufgeheizten Durchlaufofen erfolgen. Das Behandlungsmittel kann jedoch auch durch Infrarotstrahlung, insbesondere durch nahe Infrarotstrahlung, auf die entsprechende Trocknungs- bzw. Vernetzungstemperatur gebracht werden.

Bei der im Schritt (ii) einzusetzenden Konversionslösung kann es sich um eine im Stand der Technik bekannte schichtbildende oder nicht schichtbildende Phosphatierlösung handeln. Alternativ lässt sich eine saure Behandlungslösung einsetzen, die als schichtbildende Komponente komplexe Fluoride von Silicium und insbesondere von Titan und/oder Zirkon enthält. Weiterhin kann die Konversionslösung organische Polymere wie beispielsweise Polyacrylate oder aminosubstituierte Polyvinylphenolderivate enthalten. Ein Zusatz von nanoskaliger Kieselsäure oder nanoskaligem Aluminiumoxid zur Konversionslösung im Schritt (ii) kann zu weiter verbesserten Korrosionsschutz- und Haftungseigenschaften führen. Dabei werden unter "nanoskalig" Teilchen verstanden, die im Mittel einen Teilchendurchmesser von weniger als 1000 nm, insbesondere von weniger als 500 nm aufweisen.

Im Schritt iii) kann wahlweise ein Mittel eingesetzt werden, das mindestens ein Leitfähigkeitspigment enthält oder das kein solches Leitfähigkeitspigment enthält. Verwendet man ein Mittel ohne Leitfähigkeitspigment, ist es bevorzugt, dass man es im Schritt iii) mit einer solchen Nassfilmdicke aufbringt, dass man nach dem Aushärten eine Schichtdicke im Bereich von 0,5 bis 3 µm, vorzugsweise von 1 bis 3 µm erhält. Die so erhaltene Beschichtung ist ausreichend elektrisch leitfähig, um ein Fügen der beschichteten Bleche durch Elektroschweißen zu ermöglichen.

Wie im Automobilbau üblich, kann das metallische Material ausgewählt sein aus Aluminium oder einer Aluminiumlegierung, Zink oder einer Zinklegierung, Stahl oder mit Zink, Aluminium oder Legierungen von Zink oder Aluminium beschichtetem Stahl.

Weiterhin betrifft die vorliegende Erfindung ein beschichtetes Blech oder Bauteil, das nach dem vorstehend beschriebenen Verfahren erhältlich ist.

Die erfindungsgemäß beschichteten Bleche finden vorzugsweise Verwendung im Fahrzeugbau und in der Haushaltsgeräteindustrie sowie bei der Herstellung von Möbeln oder Architekturteilen. Dabei ist es üblich, nach Fertigung der entsprechenden Gegenstände aus dem erfindungsgemäß beschichteten Blech eine oder mehrere weitere Lackschichten aufzubringen. Dies geschieht im Fahrzeugbau üblicherweise durch kathodische Elektrotauchlackierung, was aufgrund der elektrischen Leitfähigkeit der Beschichtung möglich ist. Hieran schließen sich die Automobil-typischen weiteren Lackierschritte an. Für einfachere Korrosionsschutzanforderungen wie beispielsweise in der Haushaltsgeräteindustrie kann auf die erfindungsgemäß aufgebrachte Schicht ein Pulverlack als Decklack aufgetragen werden.

### Beispiele

Nachfolgend wird die Erfindung durch einige Ausführungsbeispiele näher erläutert.

### a) Vorbehandlung

Auf ein mit alkalischen Reinigern (z.B. Ridoline^{®} C 72, Ridoline^{®} 1340;Tauch-, Spritzreinigungsprodukte der Anmelderin) gereinigtes, verzinktes Metallblech wird eine kommerzielle Vorbehandlungslösung auf Basis Phosphorsäure, Manganphosphat, H₂TiF₆ und Aminomethyl-substituiertem Polyvinylphenol (Granodine^{R} 1455 der Anmelderin) aufgetragen und mit einer Lackschleuder oder einem Chemcoater auf der Metalloberfläche verteilt. Es erfolgt eine Trocknung bei 80 °C.

### b) Herstellvorschrift und Applikation der Korrosionsschutz-Zusammensetzung:

Die organischen Bindemittel werden bei Raumtemperatur in einem Dissolvergefäß vorgelegt und das Korrosionsschutzpigment(gemisch) fein dispergiert, was 10 bis 60 Minuten dauern kann. Anschließend wird das Leitfähigkeitspigment eingetragen und durch langsames Rühren bis zur kompletten Benetzung verteilt. Dies kann ebenfalls 10 bis 60 Minuten dauern. Anschließend werden gegebenenfalls Lösungsmittel und weitere Additive eingemischt.

Die Korrosionsschutz-Zusammensetzung wird mit einem Rakel oder einem Roll-Coater auf die vorbehandelten Bleche appliziert und durch Erwärmen im Trockenschrank auf die in den Tabellen angegebene Substrattemperatur gehärtet.

### Testverfahren:

### Korrosionsschutztest [nach DIN 50021]:

Drei Kanten und die Rückseite des beschichteten Prüfblechs werden mit Klebeband abgeklebt. An einer Längsseite erzeugt man eine frische Schnittkante. Ferner wird das Blech mit einem Ritz versehen. Anschließend wird das Prüfblech in das Salzsprühnebeltestgerät verbracht. Beurteilt wird nach bestimmten Zeitintervallen der Rostgrad am Ritz, Kante und auf der Blechoberfläche. In den Tabellen ist die Stundenzahl angegeben, nach der Rotrost auf den Prüfblechen zu sehen ist.

### MEK-Beständigkeit:

Ein 1 kg Gewichtsblock wird mit Methylethylketon (MEK) getränkter Watte umwickelt und über die zu testende, mit der Korrosionsschutz-Zusammensetzung beschichtete Oberfläche geführt. Die Anzahl an Doppelhüben, die benötigt werden um die Beschichtung bis zum Sichtbarwerden des metallischen Untergrundes zu entfernen, wird gezählt und ist ein Maß für die Lösemittelbeständigkeit.

T-Bend-Test: gem. ECCA-Prüfverfahren T7 [1996]: "Resistance to cracking on beding"

Das beschichtete Blech wird mit einer Abkantpresse um 180° gebogen. Ein Klebeband (Tesafilm 4104) wird auf die Kante geklebt und ruckartig abgerissen. Die Rissbildung an der umgeformten Kante wird nach DIN 53230 beurteilt.

Reverse Impact-Test: gem. ECCA-Prüfverfahren T5 [1985]: "Widerstand gegen Rissbildung bei schneller Umformung"

Mit einem Kugelschlagprüfgerät (Gewicht: 2 kg; Höhe: 1 m) wird das einseitig beschichteten Bleche umgeformt. Ein Klebeband (Tesafilm 4104) wird auf die entstandene Wölbung geklebt und ruckartig abgerissen. Optisch wird die Menge an mit dem Klebeband abgelöster Beschichtung in einer Bewertungsskala von 1 bis 5 beurteilt. Dabei bedeuten: 1: keine abgelöste Beschichtung; 5: Beschichtung weitgehend abgelöst.

### Alkalibeständigkeit:

Entsprechend dem Reverse Impact-Test wird das einseitig beschichtete Blech umgeformt. Der verformte Teil wird für 10 Minuten in eine 70 - 80 °C heiße alkalische Reinigungslösung getaucht (Ridoline^{R} C72, 1 %-ig, pH ca. 13). Ein Klebeband (Tesafilm 4104) wird auf die entstandene Wölbung geklebt und ruckartig abgerissen. Optisch wird die Menge an mit dem Klebeband abgelöster Beschichtung in einer Bewertungsskala von 1 bis 5 beurteilt. Dabei bedeuten: 1: keine abgelöste Beschichtung; 5: Beschichtung weitgehend abgelöst.

### Schweißtests:

Mit einem Schweißautomaten der Firma Dalex (Typ PMS 11-4) wurden Elektro-Schweißtests unter automobiltypischen Bedingungen durchgeführt. Es wurden Schweißpunkte innerhalb der DaimlerChrysler-Spezifikation DBL 4062/4066 ermittelt. Dies bedeutet, dass die mit dem erfindungsgemäßen Korrosionsschutzmittel beschichteten Bleche unter Praxisbedingungen mit einer ausreichenden Elektrodenstandzeit elektroschweißbar sind.

Einzelheiten zur Zusammensetzung erfindungsgemäßer Korrosionsschutz-Zusammensetzungen und Prüfergebnisse können den nachstehenden Tabellen entnommen werden. Dabei gelten folgende Akkürzungen:
PMT: "Peak Metal Temperature": Höchste erreichte Substrattemperatur beim Aushärten der Beschichtung,
MEK: MEK-Beständigkeit gemäß obiger Beschreibung,

| Komponente Nr. | Beispiel 1 | Beispiel 2 | Beispiel 3 | Beispiel 4 | Beispiel 5 | Beispiel 6 |
|---|---|---|---|---|---|---|
| 1 | 2,75 | 4,67 | 4,58 | 4,49 | 3,81 | 4,14 |
| 2 | 3,01 | 5,11 | 5,01 | 4,91 | 4,14 | 4,54 |
| 3 | 3,60 | 3,06 | 3,00 | 2,94 | 2,46 | 2,69 |
| 4 | 7,74 | 6,57 | 6,44 | 6,32 | 5,28 | 5,77 |
| 5 | 21,06 | 17,89 | 17,54 | 17,20 | 14,38 | 15,66 |
| 6 | 0,33 | 0,29 | 0,28 | 0,28 | 0,27 | 0,28 |
| 7 | 22,00 | 11,30 | 21,57 | 21,15 | 26,74 | 24,69 |
| 8 | | 10,70 | | | 8,60 | 6,49 |
| 9 | 15,00 | 15,00 | 14,71 | 14,42 | 11,99 | 14,69 |
| 10 | 0,70 | 0,70 | 0,69 | 0,67 | 0,57 | 0,60 |
| 11 | 7,00 | 7,00 | 6,86 | 6,73 | 5,66 | 6,15 |
| 12 | | | | 0,86 | | |
| 13 | | | 0,98 | | 0,90 | |
| Lösungsmittel aus Rohstoffen | 16,81 | 17,71 | 18,34 | 20,03 | 15,20 | 14,30 |
| Summe | 100,00 | 100,00 | 100,00 | 100,00 | 100,00 | 100,00 |
| | | | | | | |

| Rezeptdaten | 1 | 2 | 3 | 4 | 5 | 6 |
|---|---|---|---|---|---|---|
| Festkörper | 61,19 | 60,29 | 60,09 | 58,82 | 49,46 | 54,52 |
| P/B | | | | | | |
| Verhältnis | 0,59 | 0,60 | 0,59 | 0,59 | 0,58 | 0,65 |
| Bindemittelanteil Fest | 38,49 | 37,59 | 37,83 | 37,00 | 31,24 | 33,08 |
| Korrosionschutz pigment | 15,00 | 15,00 | 14,71 | 14,42 | 11,99 | 14,69 |
| Pigmentanteil | 22,70 | 22,70 | 22,26 | 21,82 | 18,22 | 21,44 |
| Lösemittel | 38,81 | 39,71 | 39,91 | 41,18 | 50,54 | 45,48 |

| Eigenschaften | 1 | 2 | 3 | 4 | 5 | 6 |
|---|---|---|---|---|---|---|
| PMT /°C | 160 | 160 | 160 | 160 | 160 | 160 |
| Topfzeit | ca. 48h | ca. 36h | ca. 48h | ca. 48h | ca. 48h | ca. 48 h |
| t-bend | 1 | 1-2 | 2-3 | 1 | 1-2 | 1 |
| Reverse impact | 1-2 | 1-2 | 3 | 1 | 2 | 1 |
| MEK | 10 | 11 | 8 | 9 | 9 | 5 |
| Alkalibeständigkeit | 1-2 | 1-2 | 2-3 | 2 | 2 | 1-2 |
| Korrosionsschutz | 1000 | 1000 | 1000++ | 1000 | 1000 | 1000 |

Dabei bedeuten:

### Komponente Nr.

| | |
|---|---|
| 1 | Modifiziertes Epoxidharz, (50%-ige Dispersion in Lösungsmittelgemisch): Hydroxylgruppen-haltiger Polyether ohne Epoxi-Gruppen, Reaktionsprodukt aus Bisphenol A und Epichlorhydrin, mittlere Mol-masse 40.000, OH-Zahl ca. 190. |
| 2 | Blockiertes, aliphatisches Polyisocyanat auf HDI-Basis, 70 % in Lösungsmittel |
| 3 | Aliphatisches Polyisocyanat (HDI-Trimer), (90 % in Lösungsmittel-gemisch): NCO-Gehalt ca. 19,3 bis 19,9 %, Äquivalentgewicht ca. 214 g/mol |
| 4 | Aliphatisches Polyisocyanat (HDI-Trimer), (90 % in Lösungsmittel): NCO-Gehalt ca. 17,3 bis 18,3 %, Äquivalentgewicht ca. 236 g/mol |
| 5 | Hydroxylgruppen-haltiges Polyacrylat (65 % in Lösungsmittelgemisch): Säurezahl 4-9 mg KOH/g, OH-Gehalt 2,6-3,4 % |
| 6 | Freie Säure eines komplexen Alkylphosphatesters, 66 % in Lösungsmittel |
| 7 | Diacetonalkohol |
| 8 | Mischung aus 55-65% Glutarsäuredimethylester, 15-25% Bernsteinsäuredimethylester und 10-25% Adipinsäuredimethylester |
| 9 | Korrosionsschutzpigment auf Calciumsilicat-Basis |
| 10 | Kieselsäure |
| 11 | Leitfähigkeitspigment : Graphit |
| 12 | Tannin-haltiges Netzmittel, 22% in Lösungsmittel |
| 13 | Barium-dinonylnaphthalinsulphonat, 50 % in Lösungsmittel |

Die Mittel können auch ohne Leitfähigkeitspigment (Komponente 11) formuliert werden. Man lässt dann bei den Zusammensetzungen gemäß Beispielen 1 bis 6 die Komponente 11 weg und fasst die Mengenangaben der übrigen Komponenten als Gew.-Teile auf.

## Patentansprüche

1. Mittel zum Beschichten von Metalloberflächen, das in einem organischen Lösungsmittel oder Lösungsmittelgemisch gelöste oder dispergierte organische Harzkomponenten enthält, **dadurch gekennzeichnet, dass** das Mittel mindestens folgende organische Harzkomponenten enthält:
a) als Hydroxylguppen-haltiger Polyether vorliegendes Epoxidharz auf Basis eines Bisphenol-Epichlorhydrin-Polykondensationsproduktes,
b) blockiertes aliphatisches Polyisocyanat,
c) nicht blockiertes aliphatisches Polyisocyanat,
d) mindestens eine Reaktionskomponente ausgewählt aus Hydroxylgruppen-haltigen Polyestern und Hydroxylgruppen-haltigen Poly(meth)acrylaten.

2. Mittel nach Anspruch 1, **dadurch gekennzeichnet, dass** die Harzkomponenten a) bis d) in folgenden relativen Gewichtsverhältnissen vorliegen:
a) : b) = 1: 0,8 bis 1 : 1,3
c) : d) = 1 : 1,4 bis 1 : 2,3

3. Mittel nach einem oder beiden der Ansprüche 1 und 2, **dadurch gekennzeichnet, dass** die Harzkomponenten a) und d) einerseits und b) und c) andererseits in einem relativen Gewichtsverhältnis
a) : d) = 1 : 2 bis 1: 6 und
b) : c) = 1 : 0,5 bis 1 : 5
vorliegen.

4. Mittel nach einem oder mehreren der Ansprüche 1 bis 3, **dadurch gekennzeichnet, dass** es zusätzlich ein Leitfähigkeitspigment oder eine Mischung von Leitfähigkeitspigmenten enthält, wobei das Mittel bezogen auf die Gesamtmasse des Mittels, (0,8 bis 8)·ρ Gew.-% an Leitfähigkeitspigment enthält, wobei ρ die Dichte des Leitfähigkeitspigments oder die mittlere Dichte der Mischung von Leitfähigkeitspigmenten in g/cm³ bedeutet.

5. Mittel nach einem oder beiden der Ansprüche 3 und 4, **dadurch gekennzeichnet, dass** es sowohl ein Leitfähigkeitspigment mit einer Dichte von kleiner als 3 g/cm³ als auch ein Leitfähigkeitspigment mit einer Dichte von größer als 4 g/cm³ enthält, wobei die Gesamtmenge an Leitfähigkeitspigment, bezogen auf die Gesamtmasse des Mittels, (0,8 bis 8)·ρ Gew.% beträgt, wobei ρ die mittlere Dichte der Mischung der Leitfähigkeitspigmente in g/cm³ bedeutet.

6. Mittel nach einem oder mehreren der Ansprüche 3 bis 5, **dadurch gekennzeichnet, dass** es, bezogen auf die Gesamtmasse des Mittels; [(25 bis 60) Anpassungsfaktor] Gew.-%, organische Harzkomponenten enthält, wobei die Summe der Gewichtsprozentanteile von organischer Harzkomponente und Lösungsmittel nicht größer als [93 Anpassungsfaktor] Gew.-%, ist und wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet.

7. Mittel nach einem oder mehreren der Ansprüche 3 bis 6, **dadurch gekennzeichnet, dass** es, bezogen auf die Gesamtmasse des Mittels, [(2 bis 8) Anpassungsfaktor] Gew.-%, * der Harzkomponente a) enthält, wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet.

8. Mittel nach einem oder mehreren der Ansprüche 3 bis 7, **dadurch gekennzeichnet, dass** es, bezogen auf die Gesamtmasse des Mittels, [(5 bis 25) -Anpassungsfaktor] Gew.-%, Korrosionsschutzpigment enthält, wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet.

9. Mittel nach einem oder mehreren der Ansprüche 1 bis 8, **dadurch gekennzeichnet, dass** es bezogen auf die Gesamtmasse des Mittels, [(0,1 bis 3) -Anpassungsfaktor] Gew.-%, Füllstoff ausgewählt aus Kieselsäuren enthält, wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet.

10. Mittel nach einem oder mehreren der Ansprüche 1 bis 9, **dadurch gekennzeichnet, dass** es Gleitmittel oder Umformhilfen, enthält, wobei der Anpassungsfaktor [100-2,8p]:93,85 ist und ρ die Dichte des Leitfähigkeitspigments oder die mittlere Dichte der Mischung von Leitfähigkeitspigmenten in g/cm³ bedeutet.

11. Mittel nach einem oder mehreren der Ansprüche 1 bis 3, **dadurch gekennzeichnet, dass** es kein Leitfähigkeitspigment enthält.

12. Verfahren zur Herstellung eines beschichteten Blechs oder Bauteils aus Metall, **dadurch gekennzeichnet, dass** man das zu beschichtende Blech oder Bauteil
i) erforderlichenfalls reinigt,
ii) mit einer Konversionslösung in Kontakt bringt, welche eine Konversionsschicht erzeugt, die nicht mehr als 1 mg Chrom pro m² enthält, und danach mit oder ohne Zwischenspülung
iii) mit einem Mittel nach einem oder mehreren der Ansprüche 1 bis 11 beschichtet und bei einer Substrattemperatur im Bereich von 120 bis 260 °C aushärtet.

13. Verfahren nach Anspruch 12, wobei man ein beschichtetes bandförmiges Blech aus Metall **dadurch** herstellt, dass man zumindest die Schritte ii) und iii) als Bandbehandlungs-Verfahren durchführt und im Schritt iii) das Mittel in einer solchen Menge aufbringt, dass man nach dem Aushärten eine Schichtdicke im Bereich von 0,5 bis 10 µm erhält.

14. Verfahren nach Anspruch 12, wobei man ein beschichtetes bandförmiges Blech aus Metall **dadurch** herstellt, dass man zumindest die Schritte ii) und iii) als Bandbehandlungs-Verfahren durchführt und im Schritt iii) ein Mittel nach Anspruch 11 in einer solchen Menge aufbringt, dass man nach dem Aushärten eine Schichtdicke im Bereich von 0,5 bis 3 µm erhält.

15. Beschichtetes Blech oder Bauteil, das nach einem Verfahren nach einem oder mehreren der Ansprüche 12 bis 14 erhältlich ist.

## Claims

1. An agent for coating metal surfaces that contains organic resin components dissolved or dispersed in an organic solvent or solvent mixture, **characterized in that** the agent contains at least the following organic resin components:
a) an epoxy resin present as a hydroxyl group-containing polyether and based on a bisphenol-epichlorohydrin polycondensation product,
b) blocked aliphatic polyisocyanate,
c) unblocked aliphatic polyisocyanate,
d) at least one reaction component selected from hydroxyl group-containing polyesters and hydroxyl group-containing poly(meth)acrylates.

2. The agent according to Claim 1, **characterized in that** the resin components a) to d) are present in the following relative weight ratios:
a):b)=1:0.8 to 1:1.3
c):d)=1:1.4 to 1:2.3.

3. The agent according to one or both of Claims 1 and 2, **characterized in that** the resin components a) and d) on the one hand and b) and c) on the other hand are present in a relative weight ratio of
a):d)=1:2 to 1:6 and
b):c)=1:0.5 to 1:5.

4. The agent according to one or more of Claims 1 to 3, **characterized in that** it additionally contains a conductivity pigment or a mixture of conductivity pigments, the agent containing, based on the total mass of the agent, (0.8 to 8)·ρ wt% conductivity pigment, ρ denoting the density of the conductivity pigment, or the average density of the mixture of conductivity pigments, in g/cm³.

5. The agent according to one or both of Claims 3 and 4, **characterized in that** it contains both a conductivity pigment having a density less than 3 g/cm³ and a conductivity pigment having a density greater than 4 g/cm³, the total quantity of conductivity pigment, based on the total mass of the agent, being equal to (0.8 to 8)·ρ wt%, ρ denoting the average density of the mixture of conductivity pigments in g/cm³.

6. The agent according to one or more of Claims 3 to 5, **characterized in that** it contains, based on the total mass of the agent, [(25 to 60) · adaptation factor] wt% organic resin components, the sum of the weight-percent portions of organic resin components and solvent being no greater than [93 · adaptation factor] wt%, and the adaptation factor being [100-2.8p]:93.85 and ρ denoting the density of the conductivity pigment, or the average density of the mixture of conductivity pigments, in g/cm³.

7. The agent according to one or more of Claims 3 to 6, **characterized in that** it contains, based on the total mass of the agent, [(2 to 8) • adaptation factor] wt% of resin component a), the adaptation factor being [100-2.8p]:93.85 and ρ denoting the density of the conductivity pigment, or the average density of the mixture of conductivity pigments, in g/cm³.

8. The agent according to one or more of Claims 3 to 7, **characterized in that** it contains, based on the total mass of the agent, [(5 to 25) • adaptation factor] wt% corrosion protection pigment, the adaptation factor being [100-2.8p]:93.85 and ρ denoting the density of the conductivity pigment, or the average density of the mixture of conductivity pigments, in g/cm³.

9. The agent according to one or more of Claims 1 to 8, **characterized in that** it contains, based on the total mass of the agent, [(0.1 to 3) • adaptation factor] wt% filler selected from silicic acids, the adaptation factor being [100-2.8p]:93.85 and ρ denoting the density of the conductivity pigment, or the average density of the mixture of conductivity pigments, in g/cm³.

10. The agent according to one or more of Claims 1 to 9, **characterized in that** it contains lubricants or reshaping adjuvants, the adaptation factor being [100-2.8p]:93.85 and ρ denoting the density of the conductivity pigment, or the average density of the mixture of conductivity pigments, in g/cm³.

11. The agent according to one or more of Claims 1 to 3, **characterized in that** it contains no conductivity pigment.

12. A method for manufacturing a coated panel or component made of metal, **characterized in that** the panel or component to be coated
i) is cleaned if necessary,
ii) is brought into contact with a conversion solution which generates a conversion layer that contains no more than 1 mg chromium per m², and is then, with or without an intervening rinse,
iii) coated with an agent according to one or more of Claims 1 to 11 and cured at a substrate temperature in the range from 120 to 260°C.

13. The method according to Claim 12, **characterized in that** a coated strip-shaped panel of metal being manufactured by the fact that at least steps ii) and iii) are performed as strip treatment methods, and in step iii) the agent is applied in a quantity such that after curing, a layer thickness in the range from 0.5 to 10 µm is obtained.

14. The method according to Claim 12, **characterized in that** a coated strip-shaped panel of metal being manufactured by the fact that at least steps ii) and iii) are performed as strip treatment methods, and in step iii) an agent according to Claim 11 is applied in a quantity such that after curing, a layer thickness in the range from 0.5 to 3 µm is obtained.

15. A coated panel or component that is obtainable in accordance with a method according to one or more of Claims 12 to 14.

## Revendications

1. Agent pour l'enduction de surfaces métalliques, qui contient des composants de résine organique dissous ou dispersés dans un solvant organique ou dans un mélange de solvants organiques, **caractérisé en ce que** l'agent contient au moins les composants de résine organique suivants :
a) une résine époxyde présente sous la forme d'un polyéther contenant des groupes hydroxyle, à base d'un produit de polycondensation de bisphénol-épichlorhydrine ;
b) un polyisocyanate aliphatique bloqué ;
c) un polyisocyanate aliphatique non bloqué ;
d) au moins un composant réactionnel choisi parmi des polyesters contenant des groupes hydroxyle et des poly(méth)acrylates contenant des groupes hydroxyle.

2. Agent selon la revendication 1, **caractérisé en ce que** les composants de résine a) à d) sont présents dans les rapports pondéraux relatifs suivants :
a): b)=1 :0,8 à 1 : 1,3;
c): d)= 1:1,4 à 1:2,3.

3. Agent selon l'une quelconque des revendications 1 et 2 ou les deux, **caractérisé en ce que** les composants de résine a) et d) d'une part et b) et c) d'autre part sont présents dans un rapport pondéral relatif
a):d)=1:2 à 1:6; et
b):c)=1:0,5 à 1:5.

4. Agent selon une ou plusieurs des revendications 1 à 3, **caractérisé en ce qu'**il contient en outre un pigment conducteur ou un mélange de pigments conducteurs, l'agent contenant, rapportés à la masse totale de l'agent, le pigment conducteur à concurrence de (0,8 à 8)·ρ % en poids, p représentant la densité du pigment conducteur ou bien la densité moyenne du mélange des pigments conducteurs en g/cm³.

5. Agent selon l'une quelconque des revendications 3 et 4 ou les deux, **caractérisé en ce qu'**il contient aussi bien un pigment conducteur possédant une densité inférieure à 3 g/cm³ qu'un pigment conducteur possédant une densité supérieure à 4 g/cm³, la quantité totale de pigment conducteur, rapportés à la masse totale de l'agent, s'élevant à (0,8 à 8)·ρ % en poids, p représentant la densité moyenne du mélange des pigments conducteurs en g/cm³.

6. Agent selon une ou plusieurs des revendications 3 à 5, **caractérisé en ce qu'**il contient, rapportés à la masse totale de l'agent, des composants de résine organique à concurrence de [(25 à 60) · facteur d'adaptation] % en poids, la somme des fractions en pour cent en poids en poids du composant de résine organique et du solvant n'étant pas supérieure à [93 · facteur d'adaptation] % en poids, et dans lequel le facteur d'adaptation est égal à [100-2,8 p] : 93,85 et p représente la densité du pigment conducteur ou bien la densité moyenne du mélange des pigments conducteurs en g/cm³.

7. Agent selon une ou plusieurs des revendications 3 à 6, **caractérisé en ce qu'**il contient, rapportés à la masse totale de l'agent, le composant de résine a) à concurrence de [(2 à 8) · facteur d'adaptation] % en poids, dans lequel le facteur d'adaptation est égal à [100-2,8 p] : 93,85 et p représente la densité du pigment conducteur ou bien la densité moyenne du mélange des pigments conducteurs en g/cm³.

8. Agent selon une ou plusieurs des revendications 3 à 7, **caractérisé en ce qu'**il contient, rapportés à la masse totale de l'agent, un pigment de protection contre la corrosion à concurrence de [(5 à 25) · facteur d'adaptation] % en poids, dans lequel le facteur d'adaptation est égal à [100-2,8 p] : 93,85 et p représente la densité du pigment conducteur ou bien la densité moyenne du mélange des pigments conducteurs en g/cm³.

9. Agent selon une ou plusieurs des revendications 1 à 8, **caractérisé en ce qu'**il contient, rapportés à la masse totale de l'agent, une matière de charge choisie parmi des acides siliciques à concurrence de [(0,1 à 3) · facteur d'adaptation] % en poids, dans lequel le facteur d'adaptation est égal à [100-2,8 p] : 93,85 et p représente la densité du pigment conducteur ou bien la densité moyenne du mélange des pigments conducteurs en g/cm³.

10. Agent selon une ou plusieurs des revendications 1 à 9, **caractérisé en ce qu'**il contient des agents de glissement ou des adjuvants de déformation, dans lequel le facteur d'adaptation est égal à [100-2,8 p] : 93,85 et p représente la densité du pigment conducteur ou bien la densité moyenne du mélange des pigments conducteurs en g/cm³.

11. Agent selon une ou plusieurs des revendications 1 à 3, **caractérisé en ce qu'**il ne contient aucun pigment conducteur.

12. Procédé pour la fabrication d'une tôle ou d'un composant en métal enduit, **caractérisé en ce que**
i) on nettoie le cas échéant la tôle ou le composant à enduire ;
ii) on l'amène en contact avec une solution de conversion qui génère une couche de conversion qui ne contient pas plus de 1 mg de chrome par m², et ensuite, en présence ou en l'absence d'un rinçage intermédiaire,
iii) on l'enduit avec un agent selon une ou plusieurs des revendications 1 à 11 et on le durcit à une température du substrat dans la plage de 120 à 260 °C.

13. Procédé selon revendication 12, dans lequel on fabrique une tôle enduite en forme de ruban en métal par le fait que l'on met en oeuvre au moins les étapes ii) et iii) sous la forme d'un procédé de couchage sur bande et à l'étape iii), on applique l'agent en une quantité telle que l'on obtient après le durcissement une épaisseur de couche dans la plage de 0,5 à 10 µm.

14. Procédé selon la revendication 12, dans lequel on fabrique une tôle enduite en forme de ruban en métal par le fait que l'on met en oeuvre au moins les étapes ii) et iii) sous la forme d'un procédé de couchage sur bande et à l'étape iii), on applique un agent selon la revendication 11 en une quantité telle que l'on obtient après le durcissement une épaisseur de couche dans la plage de 0,5 à 3 µm.

15. Tôle ou composant enduit, que l'on peut obtenir conformément à un procédé selon une ou plusieurs des revendications 12 à 14.
